# EUROPEAN PATENT SPECIFICATION

(11) **EP 4 026 707 B1**
(45) Date of publication and mention of the grant of the patent: **16.10.2024**
(21) Application number: 22150171.1
(22) Date of filing: 04.01.2022
(51) Int. Cl.: B60C 9/20, B60C 9/22

(54) **A HEAVY DUTY TIRE**
SCHWERLASTREIFEN
PNEU POIDS LOURD

(30) Priority: 04.01.2021 KR 20210000153
(43) Date of publication of application: 13.07.2022
(73) Proprietor: HANKOOK TIRE & TECHNOLOGY CO., LTD, Gyeonggi-do 13494 (KR)
(72) Inventor: BAE, Sung Ryul, 43, Gajeong-ro, Yuseong-gu, Daejeon (KR); KIM, Hee Nam, 50, Yuseong-daero 935beon-gil, Yuseong-gu, Daejeon (KR); KIM, Yong Keun, 50, Yuseong-daero 935beon-gil, Yuseong-gu, Daejeon (KR); LEE, Yoon Gon, 77, Dajeongjungang-ro, Sejong-si (KR)
(74) Representative: Pfenning, Meinig & Partner mbB

(56) References cited:
- DE-A1- 102017 209 677
- US-A1- 2003 089 441
- US-A1- 2010 243 122
- US-A1- 2014 190 611
- US-A1- 2014 373 992
- US-A1- 2015 298 505

## Description

### CROSS REFERENCE TO RELATED APPLICATION

The present application claims priority to Korean Patent Application No. 10-2021-0000153, filed on January 4, 2021

### BACKGROUND OF THE INVENTION

### Field of the Invention

The present application relates to a heavy-duty tire, and more particularly, to a heavy-duty tire to which a technology for winding a reinforcing belt part in a circumferential direction of the tire is applied.
US 2014/373992 A1 discloses that the pneumatic tire includes a belt layer that is formed by laminating a plurality of belt plies including the circumferential reinforcing layer.
US 2010/243122 A1 discloses a tire comprising at least two working layers and at least one layer of circumferential reinforcing elements. The layer of circumferential reinforcing elements comprises at least a central part and two axially exterior parts, the elastic modulus of the rubber compound with which the circumferential reinforcing elements of the central part are coated being less than the modulus of the rubber compound with which the circumferential reinforcing elements of the axially exterior parts are coated.
US 2015/298505 A1 discloses that a pneumatic tire comprises a carcass layer, a belt layer disposed on an outer side of the carcass layer in a tire radial direction, and a tread rubber disposed on the outer side of the belt layer in the tire radial direction.
DE 10 2017 209677 A1 discloses a method for determining stress changes in a belt layer of vehicle tyres, preferably of radial construction, having a tread, a carcass insert and a belt structure comprising at least two belt layers, wherein the belt layers have steel cords as strength members.
US 2014/190611 A1 discloses a tire comprising an overlay ply wherein (i) the shoulder section of the overlay comprises an elastomer and short polymeric or non-polymeric reinforcing fibers present in an amount of from 0.1 to 10 parts fiber per hundred parts of elastomer, the short fibers having a tenacity of at least 2 grams per dtex, a modulus of at least 10 grams per dtex and a length of from 0.1 to 8 mm and wherein the fibers are aligned substantially parallel to each other in a controlled angle of orientation within the overlay wherein the orientation is selected such that it decreases tire noise, and (ii) the section of overlay in the crown of the tire comprising cords of continuous filament polymeric fibers or continuous strands of metal or combinations thereof, the cords being aligned in a circumferential direction around the tire.

### Description of the Related Art

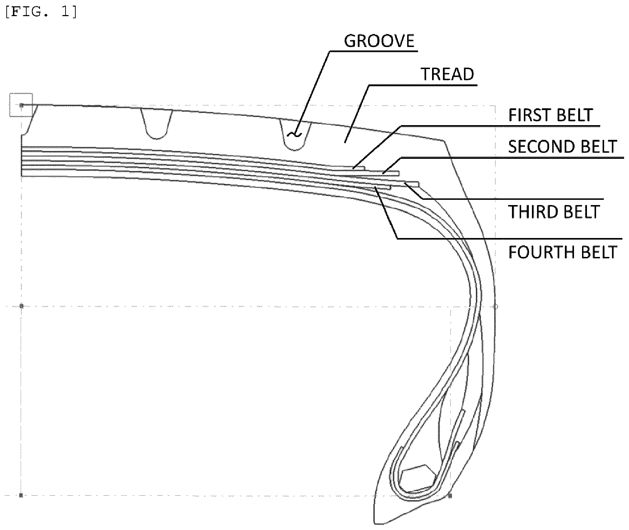

In the related art, a heavy-duty tire for a truck or bus includes steel belts disposed in four layers, and a carcass disposed in a single layer. FIG. 1 illustrates the tire in the related art.

Recently, as a load per tire increases, a reinforcing belt is additionally applied to optimize a ground contact shape (a grounded shape of the tire when the tire is in contact with the ground surface) and enhance durability performance of the belts.

In general, in a case in which a reinforcing belt is applied between a second belt and a third belt, a single strand of steel cord is wound in a spiral coil shape at an angle of 0 to 1 degree.

Meanwhile, 5 to 10 minutes (at a working speed of 120 MPM (120 m/min)) are required for each tire to wind a single strand of steel cord spirally. To improve the working process of winding the steel cord spirally (in the form of an infinite coil) as described above, a dual-strand supply technology for supplying two strands of steel cords is also applied.

However, the technology for winding the single or two strands of steel cords has a limitation in improving the ground contact shape by inhibiting an overall growth of an outer portion of the belt.

That is, a method of winding several strands of steel cords in the form of a rolling product having a predetermined width is more effective in inhibiting an overall growth of the belt compared to the method of winding the single strand of steel cord.

Recently, as autonomous driving technologies are activated, it is preferable that tires, which are excellent in long-term durability and abraded uniformly by a ground contact shape optimized by an increase in load per tire, are applied to large-size vehicles such as trucks and buses in the future.

However, since the reinforcing belt in the related art is manufactured by winding the single or two strands of steel cords spirally, there is a problem in that the performance in manufacturing the reinforcing belt is deficient.

In addition, the dual-strand supply method also causes a spatial limitation because an additional facility needs to be manufactured. For this reason, the dual-strand supply method has a limitation in inhibiting the growth of a casing of the entire belt.

Therefore, to improve abrasion performance and durability performance of the tire to be applied to the large-size vehicle, there is a need to develop a technology for uniformizing and minimizing a ground pressure of a tread part in contact with the ground surface and minimizing the amount of growth of the tire in a circumferential direction of the tire when the vehicle travels over a long period of time.
(Patent Document 1) Patent No. 10-2130374 (June 30, 2020)
(Patent Document 2) Patent No. 10-2172330 (October 26, 2020)

### SUMMARY OF THE INVENTION

The invention is defined by the independent claim Preferable embodiments are defined by the dependent claims. The present invention has been made in an effort to solve the above-mentioned problems, and an object of the present invention is to provide a heavy-duty tire, in which a reinforcing belt part is inserted, in a circumference direction of the tire, into at least one steel belt or between a tread part and a steel belt part, thereby improving durability, RR performance, and handling performance of the steel belt part, uniformizing a ground pressure applied to the tread part, and reducing a rate of incidence of unsuitable air pressure.

Technical problems to be solved by the present invention are not limited to the above-mentioned technical problems, and other technical problems, which are not mentioned above, may be clearly understood from the following descriptions by those skilled in the art to which the present application pertains.

To achieve the above-mentioned object, the present invention provides a heavy-duty tire as defined in claim 1.

According to claim 1 the steel belt part comprises : a first steel belt disposed adjacent to a carcass; a second steel belt positioned above the first steel belt; a third steel belt positioned above the second steel belt; and a fourth steel belt positioned above the third steel belt. Each of a plurality of reinforcing belt parts is inserted between the second steel belt and the third steel belt and wound in the circumferential direction of the tire.

The reinforcing belt parts are respectively formed at two opposite sides and a central portion of the tread part and disposed to be spaced apart from one another.

In a preferred embodiment of the present invention, the reinforcing belt part may be manufactured by rolling the steel cord within a range of 14 EPI to 18 EPI.

In another preferred embodiment of the present invention, the reinforcing belt part may be manufactured to have a width of 10 mm to 20 mm.

The reinforcing belt parts may include rubber with which the steel cords are topped, a diameter of the steel cord may be 0.8 mm to 1.0 mm, and a thickness of the reinforcing belt part may be 0.85 mm to 1.1 mm.

In a preferred embodiment of the present invention, a tensile force of the steel cord may be 784,532 N, which is 80 kgf to 1078,73 N, which is 110 kgf.

According to the present invention configured as described above, the reinforcing belt part is inserted, in the circumference direction of the tire, between two steel belts, thereby improving durability, RR performance, and handling performance of the steel belt part, uniformizing the ground pressure applied to the tread part, and reducing the rate of incidence of unsuitable air pressure.

The effects of the present invention are not limited to the above-mentioned effects, and it should be understood that the effects of the present invention include all effects that may be derived from the detailed description of the present invention or the appended claims.

### BRIEF DESCRIPTION OF THE DRAWINGS

FIG. 1 is a cross-sectional side view illustrating a tire in the related art when viewed in one direction.
FIG. 2 is a cross-sectional side view illustrating a heavy-duty tire according to a non-claimed example to understand the present invention when viewed in one direction.
FIG. 3 is a view illustrating a result of analyzing the performance of the heavy-duty tire according to a non-claimed example to understand the present invention and the performance of a tire having a general structure.

### DETAILED DESCRIPTION OF THE INVENTION

Hereinafter, the present invention will be described with reference to the accompanying drawings. However, the present invention may be implemented in various different ways and is not limited to the embodiments described herein. A part irrelevant to the description will be omitted in the drawings in order to clearly describe the present invention, and similar constituent elements will be designated by similar reference numerals throughout the specification.

Throughout the present specification, when one constituent element is referred to as being "connected to (coupled to, in contact with, or linked to)" another constituent element, one constituent element can be "directly connected to" the other constituent element, and one constituent element can also be "indirectly connected to" the other element with other elements interposed therebetween. In addition, unless explicitly described to the contrary, the word "comprise/include" and variations such as "comprises/includes" or "comprising/including" will be understood to imply the inclusion of stated elements, not the exclusion of any other elements.

The terms used in the present specification are used only for the purpose of describing particular embodiments and are not intended to limit the present application. Singular expressions include plural expressions unless clearly described as different meanings in the context. In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof.

Hereinafter, a non-claimed example to understand the present application will be described with reference to the accompanying drawings.

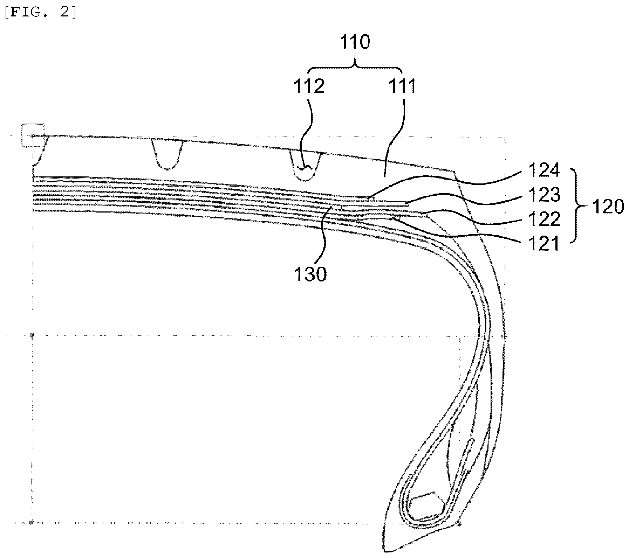

FIG. 2 is a cross-sectional side view illustrating a heavy-duty tire according to a non-claimed example to understand the present application when viewed in one direction.

Referring to FIG. 2, a heavy-duty tire 100 according to a non-claimed example to understand the present application includes a tread part 110, a steel belt part 120, and a reinforcing belt part 130.

When the heavy-duty tire 100 rotates while the vehicle travels, the tread part 110 comes into contact with a road surface and pushes the road surface, such that the vehicle moves. The tread part includes treads 111 and grooves 112.

The tread 111 is a portion that comes into contact with the road surface. The tread 111 may be provided in plural, and the grooves 112 are formed between the plurality of treads 111. Therefore, the plurality of treads 111 is disposed to be spaced apart from one another.

The grooves 112 are formed between the plurality of treads 111 and smoothly discharge water or foreign substances introduced while the vehicle travels in the state in which the treads 111 are in contact with the road surface.

The steel belt part 120 includes one or more steel belts 121, 122, 123, and 124 disposed inside the tread part 110. In this case, the one or more steel belts 121, 122, 123, and 124 are a first steel belt 121, a second steel belt 122, a third steel belt 123, and a fourth steel belt 124.

The first steel belt 121 is disposed adjacent to a carcass.

The second steel belt 122 is positioned above the first steel belt 121.

The third steel belt 123 is positioned above the second steel belt 122.

The fourth steel belt 124 is positioned above the third steel belt 123.

The reinforcing belt part 130 is inserted between the one or more steel belts 121, 122, 123, and 124 or between the tread part 110 and the steel belt part 120.

Specifically, the reinforcing belt part 130 is manufactured as a rolling product made by winding a steel cord in a circumferential direction of the tire.

In addition, the reinforcing belt part 130 is manufactured by rolling the steel cord within a range of 14 EPI to 18 EPI. Here, EPI represents the number of strands of steel cords per one inch.

In addition, the reinforcing belt part 130 is manufactured to have a width of 10 mm to 20 mm, and a thickness of the reinforcing belt part 130 is 0.85 mm to 1.1 mm.

The reinforcing belt part 130 may include a steel cord, and rubber with which the steel cord is topped.

In this case, a diameter of the steel cord is 0.8 mm to 1.0 mm, an elongation percentage of the steel cord is 3.5% or more, and a tensile force of the steel cord is 80 kgf to 110 kgf. To this end, the reinforcing belt part 130 is manufactured by coating the steel cord with topping rubber by inputting the strands of steel cords, one by one, into a spinneret die through a rolling process.

The steel cord has a lower tensile force than a spiral cord in the related art but has an increased EPI, thereby obtaining an effect of inhibiting the growth of the tire and reducing a weight of the tire.

However, in the case of the spiral cord in the related art, a diameter of the steel cord may be 1.1 to 1.5 mm, and a tensile force of the steel cord may be 120 to 170 kg.

In the case of the spiral cord in the related art, a single strand of cord is directly topped with rubber or rubber is attached to and covers the entire cord after the cord is completely wound. In this case, the topping rubber on the single strand of cord is not uniform, and the adhesiveness (tack) between the spiral cord and the topping rubber is degraded, which causes an unsuitable air pressure (defect) when the tire is vulcanized.

In addition, it is difficult to reduce the weight of the spiral cord in the related art because the diameter of the cord is large and the thickness of the topping rubber (including the cord) is 1.5 mm or more.

In contrast, the reinforcing belt part 130 according to the example may be manufactured such that a thickness of the topping rubber (including the cord) is at least 0.85 mm. Therefore, the reinforcing belt part 130 may be lightweight, thereby reducing rotational resistance against the tire.

The reinforcing belt part 130 may be inserted at different positions according to the example.

First, the reinforcing belt part 130 may be wound once or twice in the circumferential direction of the tire on outermost peripheral layers of first and third steel belts 121 and 123 or outermost peripheral layers of the second and fourth steel belts 122 and 124.

In this case, the reinforcing belt part 130 is spirally formed and manufactured to have a width of 10 mm to 15 mm.

Second, the reinforcing belt part 130 is inserted between the second steel belt 122 and the third steel belt 123 and wound in the circumferential direction of the tire.

In this case, the reinforcing belt part 130 has the same width as the second steel belt 122.

The process of forming the reinforcing belt part 130 is performed for a working time of 1 minute or less, and the reinforcing belt part 130 is wound with a preset width (10 to 15 mm) while receiving preset tension during the working process. Therefore, the amount of growth of the tire in the circumferential direction is reduced compared to the method in the related art (the method of winding the strands of cords one by one) . For example, 5 to 7 minutes are required to wind the single strand of steel cord spirally in the related art.

Third, according to an embodiment of the present application, the reinforcing belt parts 130 are respectively formed at two opposite sides and a central portion of the tread part 110 and disposed to be spaced apart from one another.

Specifically, the reinforcing belt parts 130, which are cut into predetermined widths, are formed on three portions (left, center, and right portions) with a width of 50 to 100 mm between the second steel belt 122 and the third steel belt 123 while receiving the preset tension in the circumferential direction.

In this case, the reinforcing belt parts 130 are positioned at the central portion and the two opposite sides of the tread part 110 when the tread part 110 is viewed in the normal line direction.

Because ground pressures applied to the central portion and the two opposite sides of the tread part 110 are typically different from one another, the reinforcing belt parts 130 are divided and then wound, thereby optimizing the ground contact shapes of the central portion and the two opposite sides of the tread part 110.

In the case of the tire in the related art used for a truck or bus, intervals between the cords are not uniform because the strands of cords made of steel are wound one by one in the form of a spiral coil. Further, the growth of the tire in the circumferential direction of the tire cannot be uniformly inhibited because a high shearing force is generated between the second belt and the third belt.

In contrast, in the case of the reinforcing belt part 130 according to a non-claimed example to understand the present application, the steel cord is cut by rolling at preset intervals (EPI (number of cord strands per one inch), which makes it possible to manufacture the reinforcing belt part 130 in which the interval of the steel cord is 14 to 18 EPI.

However, in the case in which the strands of steel cords are wound one by one according to the forming process (SPC) in the related art, the interval between the steel cords is restricted to 9 to 13 EPI, and thus the reinforcing belt part 130 is cut into a width of 10 to 15 mm, such that a small amount of shear stress is generated between the second steel belt 122 and the third steel belt 123.

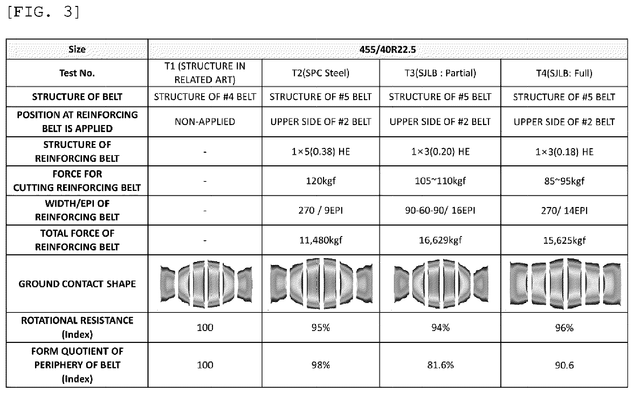

FIG. 3 is a view illustrating a result of analyzing the performance of the heavy-duty tire according to a non-claimed example to understand the present application and the performance of a tire having a general structure.

In FIG. 3, T1 represents a tire including four belts having a general structure, T2 represents a tire including five belts including spiral cords, T3 represents a tire (partially) including the reinforcing belt part 130 according to a non-claimed example to understand the present application, and T4 represents a tire (fully) including the reinforcing belt part 130 according to a non-claimed example to understand the present application.

Specifically, in T1, a structure of a radial tire for a truck or bus in the related art is applied to a tire having an ultra-super single (USS) size. In general, a reinforcing belt is usually applied to the USS tire (T2).

In the case in which the reinforcing belt is applied by winding the strands of cords one by one, there is a limitation in inhibiting the overall growth of the belt casing and the manufacturing time increases.

According to the analysis results illustrated in FIG. 3, T1 is excellent in RR performance, but the five belts, to which the reinforcing belt is applied to optimize the belt durability and the ground contact shape, is generally applied to the USS tire. It can be seen that the RR performance in T1 results from the effect made by reducing the weight.

That is, when in T2 to T4, a weight is set to be equal to a weight in T1, the RR performance is predicted to be equal in level to the RR performance in T1.

According to a result of applying the reinforcing belt (spiral coil (SPC)) of T2, a form quotient of the periphery of the belt decreases by maximum 17% compared to T3 and T4. That is, the durability performance of the reinforcing belt is best in T3 and T4 to which the reinforcing belt part 130 is applied.

When T4 is fully applied, the amount of overall growth of the belt is inhibited to a minimum level, the amount of shearing force between the second belt and the third belt is decreased, and the ground contact shape also becomes quadrangular, such that the ground pressure is uniformly distributed, the tire is uniformly abraded, and the belt performance is improved.

In a case in which a load index is 4,000 Kg/1EA, the structure including the first to third belts and the reinforcing belt part 130 may be applied to improve the belt durability performance and the RR performance in comparison with the general structure in the related art.

If the load index is high (4,500 kg or more), the reinforcing belt part 130 may be applied by being wound once or twice on an upper side of an outermost periphery of the fourth steel belt 124, which makes it possible to inhibit the amount of growth of the belt, maintain the rigidity of the entire belt even at a high speed, and improve the handling performance.

In the case of T3, the reinforcing belt part 130 is partially (split) applied, which makes it possible to improve the durability of the belt and the RR performance in comparison with the general structure in the related art. However, the reinforcing belt part 130 is partially (split) applied between the second steel belt 122 and the third steel belt 123 (at a position at which the angle of the belt is reversed and the shearing force is maximally generated).

According to the present application described above, since the reinforcing belt part 130 is cut into a preset width (10 to 15 mm), the adhesiveness (tack) between the reinforcing belt part and the belt part is not degraded even though the reinforcing belt part 130 is attached on the outermost peripheral layer of the belt or between the second steel belt 122 and the third steel belt 123. Therefore, an incidence rate of unsuitable air pressure is low.

In addition, according to the present application, in the case in which the slitting is performed on the reinforcing belt part 130 with a width of 10 to 20 mm and the reinforcing belt part 130 is applied by being wound on the upper side of the outermost periphery of the belt, the reinforcing belt part 130 may be applied to the upper sides of the first to third steel belts, the first to fourth steel belts, the second to third steel belts, and the second to fourth steel belts.

According to a non-claimed example to understand the present invention, since the reinforcing belt part is applied to the upper side of the outermost peripheral layer of the belt, the tire may be uniformly grown under high-speed traveling and high-load conditions, the uniform ground pressure may be ensured, and the handling performance may be improved.

It will be appreciated that the above embodiments have been described above for purposes of illustration. Therefore, it should be understood that the above-described embodiments are illustrative in all aspects and do not limit the present invention

The scope of the present invention is represented by the claims

### DESCRIPTION OF REFERENCE NUMERALS

- 100:: Heavy-duty tire
- 110:: Tread part
- 111:: Tread
- 112:: Groove
- 120:: Steel belt part
- 121:: First steel belt
- 122:: Second steel belt
- 123:: Third steel belt
- 124:: Fourth steel belt
- 130:: Reinforcing belt part

## Claims

1. A heavy-duty tire comprising:
a tread part (110) configured to contact with a road surface;
a steel belt part (120) comprising one or more steel belts (121, 122, 123, 124) formed inside the tread part (110); and
a plurality of reinforcing belt parts (130);
wherein the steel belt part (120) comprises:
a first steel belt (121) disposed adjacent to a carcass;
a second steel belt (122) positioned above the first steel belt (124);
a third steel belt (123) positioned above the second steel belt (123); and
a fourth steel belt (124) positioned above the third steel belt (122);
**characterized in that**
each of the reinforcing belt parts (130) is manufactured as a rolling product made by winding steel cords in a circumferential direction of the tire;
wherein each of the reinforcing belt parts (130) is inserted between the second steel belt (122) and the third steel belt (123) and wound in the circumferential direction of the tire; and
wherein the reinforcing belt parts (130) are respectively formed at two opposite sides and a central portion of the tread part (110) and disposed to be spaced apart from one another.

2. The heavy-duty tire of claim 1, wherein each of the reinforcing belt parts (130) is manufactured by rolling the steel cord within a range of 14 EPI to 18 EPI.

3. The heavy-duty tire of claim 1, wherein each of the reinforcing belt parts (130) is manufactured to have a width of 10 mm to 20 mm.

4. The heavy-duty tire of claim 1, wherein each of the reinforcing belt parts (130) comprises the steel cords and a rubber with which the steel cords are topped, and
wherein a diameter of the steel cords is 0.8 mm to 1.0 mm, and a thickness of the reinforcing belt part (130) is 0.85 mm to 1.1 mm.

5. The heavy-duty tire of claim 1, wherein a tensile force of the steel cords is 784,532 N, which is 80 kgf, 1078,73 N, which is to 110 kgf.

## Patentansprüche

1. Schwerlastreifen, umfassend:
ein Laufflächenteil (110), das eingerichtet ist, mit einer Straßenoberfläche in Kontakt zu kommen;
ein Stahlriementeil (120), umfassend einen oder mehrere Stahlriemen (121, 122, 123, 124), das innerhalb des Laufflächenteils (110) ausgebildet ist; und
eine Vielzahl von Verstärkungsriementeilen (130);
wobei das Stahlriementeil (120) umfasst:
einen ersten Stahlriemen (121), der neben einer Karkasse angeordnet ist;
einen zweiten Stahlriemen (122), der oberhalb des ersten Stahlriemens (124) angeordnet ist;
einen dritten Stahlriemen (123), der oberhalb des zweiten Stahlriemens (123) angeordnet ist; und
einen vierten Stahlriemen (124), der oberhalb des dritten Stahlriemens (122) angeordnet ist;
**dadurch gekennzeichnet, dass**
jedes der Verstärkungsriementeile (130) als Walzprodukt gefertigt wird, das durch Aufwickeln von Stahlkorden in Umfangsrichtung des Reifens hergestellt wird;
wobei jedes der Verstärkungsriementeile (130) zwischen dem zweiten Stahlriemen (122) und dem dritten Stahlriemen (123) eingefügt und in der Umfangsrichtung des Reifens gewickelt ist; und
wobei die Verstärkungsriementeile (130) jeweils an zwei gegenüberliegenden Seiten und einem mittleren Abschnitt des Laufflächenteils (110) ausgebildet und so angeordnet sind, dass sie voneinander beabstandet sind.

2. Schwerlastreifen nach Anspruch 1, wobei jedes der Verstärkungsriementeile (130) durch Walzen des Stahlkords in einem Bereich von 14 EPI bis 18 EPI gefertigt wird.

3. Schwerlastreifen nach Anspruch 1, wobei jedes der Verstärkungsriementeile (130) so gefertigt wird, dass es eine Breite von 10 mm bis 20 mm aufweist.

4. Schwerlastreifen nach Anspruch 1, wobei jedes der Verstärkungsriementeile (130) die Stahlkorde und Gummi umfasst, mit dem die Stahlkorde überzogen sind, und
wobei ein Durchmesser der Stahlkorde 0,8 mm bis 1,0 mm und eine Dicke des Verstärkungsriementeils (130) 0,85 mm bis 1,1 mm beträgt.

5. Schwerlastreifen nach Anspruch 1, wobei eine Zugkraft der Stahlkorde 784,532 N, was 80 kgf entspricht, bis 1078,73 N, was 110 kgf entspricht, beträgt.

## Revendications

1. Pneumatique pour poids-lourd, comprenant :
une partie de bande de roulement (110) configurée pour entrer en contact avec une surface de route ;
une partie de bandes en acier (120) comprenant une ou plusieurs bandes en acier (121, 122, 123, 124) formées à l'intérieur de la partie de bande de roulement (110) ; et
une pluralité de parties de bandes de renforcement (130) ;
dans lequel la partie de bandes en acier (120) comprend :
une première bande en acier (121) disposée adjacente à une carcasse ;
une deuxième bande en acier (122) positionnée au-dessus de la première bande en acier (124) ;
une troisième bande en acier (123) positionnée au-dessus de la deuxième bande en acier (123) ; et
une quatrième bande en acier (124) positionnée au-dessus de la troisième bande en acier (122) ;
**caractérisé en ce que**
chacune des parties de bande de renforcement (130) est fabriquée en tant que produit de laminage fabriqué en enroulant des câbles d'acier dans une direction circonférentielle du pneumatique ;
dans lequel chacune des parties de bande de renforcement (130) est insérée entre la deuxième bande en acier (122) et la troisième bande en acier (123) et enroulée dans la direction circonférentielle du pneumatique ; et
dans lequel les parties de bande de renforcement (130) sont respectivement formées au niveau de deux côtés opposés et d'une partie centrale de la partie de bande de roulement (110) et disposées pour être espacées les unes des autres.

2. Pneumatique pour poids-lourd selon la revendication 1, dans lequel chacune des parties de bande de renforcement (130) est fabriquée en laminant le câble d'acier dans une plage de 14 EPI à 18 EPI.

3. Pneumatique pour poids-lourd selon la revendication 1, dans lequel chacune des parties de bande de renforcement (130) est fabriquée pour avoir une largeur de 10 mm à 20 mm.

4. Pneumatique pour poids-lourd selon la revendication 1, dans lequel chacune des parties de bande de renforcement (130) comprend les câbles d'acier et un caoutchouc dont les câbles d'acier sont recouverts, et
dans lequel un diamètre des câbles d'acier est de 0,8 mm à 1,0 mm, et une épaisseur de la partie de bande de renforcement (130) est de 0,85 mm à 1,1 mm.

5. Pneumatique pour poids-lourd selon la revendication 1, dans lequel une force de traction des câbles d'acier est de 784 532 N, à savoir 80 kgf, à 1078,73 N, à savoir 110 kgf.
